# EUROPEAN PATENT SPECIFICATION

(11) **EP 4 563 203 B1**
(45) Date of publication and mention of the grant of the patent: **20.05.2026**
(21) Application number: 24216101.6
(22) Date of filing: 28.11.2024
(51) Int. Cl.: A63B 60/36, A63B 53/14, A63B 60/14, A63B 60/62, A63B 57/60, A63B 102/32

(54) **GOLF CLUB GRIP REMOVAL TOOL**
WERKZEUG ZUM ENTFERNEN DES GOLFSCHLÄGERGRIFFS
OUTIL DE RETRAIT DE POIGNÉE DE CLUB DE GOLF

(30) Priority: 29.11.2023 US 202363604017 P
(43) Date of publication of application: 04.06.2025
(73) Proprietor: Eaton Intelligent Power Limited, Dublin 4 (IE)
(72) Inventor: CAVILL, Gregory William, Dublin, D04 Y0C2 (IE); FISK, Kyle James, Dublin, D04 Y0C2 (IE); SHAFFER, Dillan Scott, Dublin, D04 Y0C2 (IE); HOWARD, Taajwar DVan, Dublin, D04 Y0C2 (IE)
(74) Representative: Derry, Paul Stefan

(56) References cited:
- CN-U- 208 694 196
- GB-A- 2 394 406
- GB-A- 2 410 889
- KR-A- 20010 063 871
- US-A- 5 094 557
- US-A- 6 041 795
- RAZOR BB-8: "How To Remove/Install Bike Handlebar Grips with hot water", 15 January 2014 (2014-01-15), XP093287060, Retrieved from the Internet <URL:https://www.youtube.com/watch?v=4TJzRg2ICUs> [retrieved on 20250616]

## Description

### Background

In the sport of golf, maintaining a peak grip performance of the golf club is fundamental to maximizing a player's potential. The golf club grips require regular replacement for peak performance. Conventional grip installation methods currently pose a few challenges for the re-gripping process. Grip and tape removal is normally seen as a substantial barrier to an efficient re-gripping process. Golf grips are normally adhered to the club shafts via double-sided tape. Over time, the tape tends to dry out and becomes challenging to remove. The dry tape tends to tear and leave residue behind, taking up significant time and effort during the re-gripping process. Golf players tend to see the grip and tape removal step as being the biggest hinderance in deciding when to replace grips.

Further improvements in club re-gripping processes are desired. Specifically, solutions aimed at significantly reducing the effort and time needed to prepare the golf club for a new grip, improving the overall re-gripping process, are desired.

CN 208 694 196 U describes a special automatic cleaning machine of brassie, including base, shell, washing case, puddler, brush cylinder, fastener, clamping piece, spring coil and heater, the base upside is equipped with the shell, the shell inboard is equipped with the washing case, it is equipped with the puddler to wash the incasement side, the puddler downside is equipped with the motor, be equipped with the heater on the puddler, it all is equipped with brush cylinder to wash two sides in the case, brush cylinder can dismantle with the washing case and be connected, be equipped with fastener on the washing case, the fastener inboard is equipped with the clamping piece, be equipped with the spring coil between clamping piece and the fastener. Carry out abluent in -process to brassie for cleaning solvent can fully be dissolved, makes to wash more thoroughly to brassie, is fit for using widely, strengthens brassie fixedly, has prevented that brassie from taking place to drop, has reduced brassie's injury degree, reduces the use of cost, makes things convenient for people's use.

Razor bb-8, "How To Remove/Install Bike Handlebar Grips with hot water," 15 January 2014, https://www.youtube.com/watch?v=4TJzRg2ICUs, describes installing and removing a bicycle handlebar grip using hot water.

### Summary

The matter for protection is defined by the appended claims. The inventive aspects of the present disclosure aim to significantly reduce the challenges of removing the worn grip and the existing double-sided tape from a club shaft for preparing the club for the re-gripping process. In certain aspects, the present inventive concepts can reduce the time to remove both the grip and the tape by at least 50% as compared to conventional methods. Furthermore, the inventive aspects described herein allow the processing of the clubs in batches rather than individually.

### Brief Description of the Drawings

The accompanying drawings are included to provide a further understanding of the inventive aspects of the present disclosure and are incorporated in and constitute a part of this specification. The drawings illustrate exemplary embodiments of the present disclosure and together with the description serve to further explain the principles of the disclosure. Other aspects of the present disclosure and many of the advantages of the present disclosure will be readily appreciated as the present disclosure becomes better understood by reference to the following Detailed Description when considered in connection with the accompanying drawings.
FIG. 1A is a perspective view of a golf club grip removal tool/device having features that are examples of inventive aspects in accordance with the present disclosure.
FIG. 1B is a side view of the golf club grip removal tool of FIG. 1.
FIG. 2 is another perspective view of the golf club grip removal tool of FIG. 1, shown with a number of golf clubs placed therein for processing.
FIG. 3 is a close-up view illustrating the gromets of the tool of FIG. 2, shown with a golf club inserted therein.
FIG. 4 shows the golf club grip removal tool in a dis-assembled configuration, illustrating the individual components of the tool.
FIG. 5 is a top perspective view of one of the gromets that are provided as part of the club support used for providing stability to the golf clubs during the use of the tool of FIGS. 1-4.
FIG. 6 illustrates a bottom perspective view of the gromet of FIG. 5.
FIG. 7 illustrates a side view of the gromet of FIG. 5.

### Detailed Description

The present disclosure is directed to embodiments of golf club grip removal tools and methods of use thereof.

Generally, the worn grips of the golf clubs are submerged into a tank of preheated water. In certain preferred embodiments, the water is set to a temperature of about 77 degrees Celsius (170 degrees F). The worn grips are submerged for at least 3 minutes in certain instances. The pre-submerging of the worn grips in the preheated water for a predetermined amount of time significantly facilitates the grip and tape removal from the club shaft.

According to one example embodiment, the inventive aspects utilize a tool/device that can allow the simultaneous submerging of multiple club shafts. According to one example, the tool can allow the simultaneous submerging or pre-processing of all thirteen clubs and a putter. Compared to conventional methods that might normally utilize a heat gun to soften the tape adhesive one club at a time, the inventive solutions allow the pre-processing of multiple grips, significantly reducing the time for the re-gripping process (e.g., by over 50%).

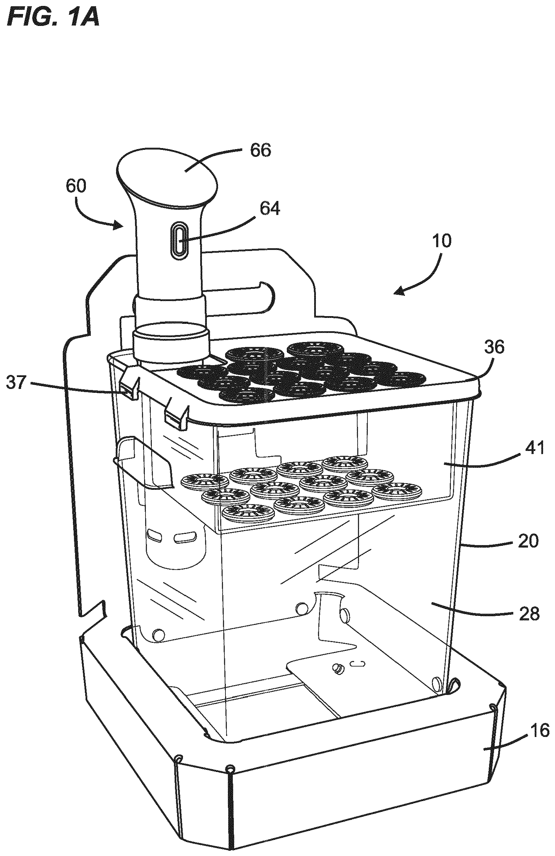

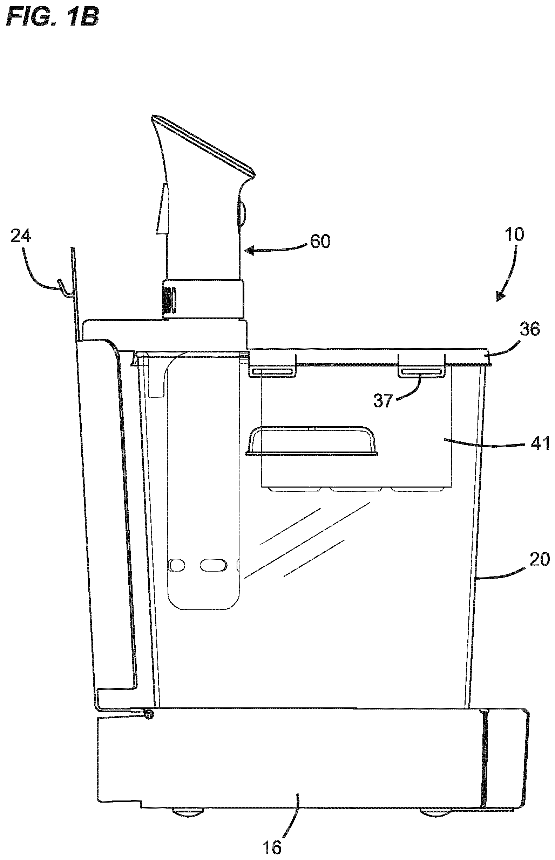

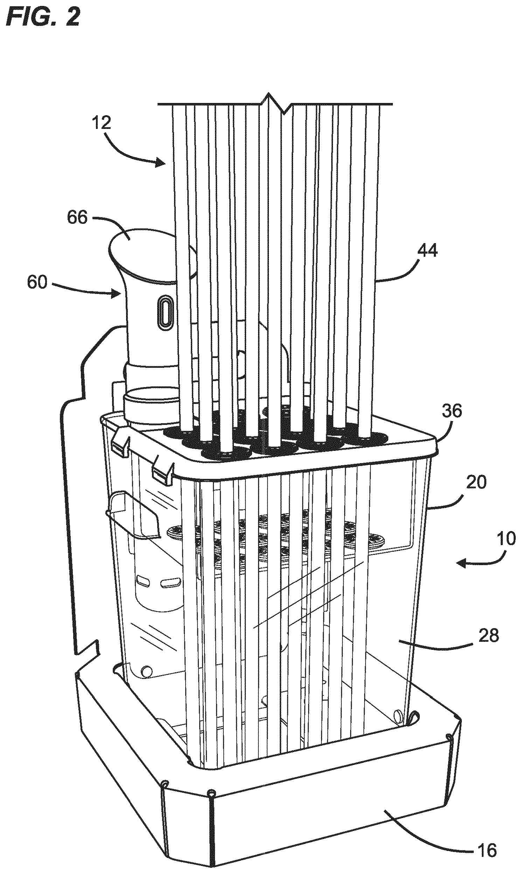

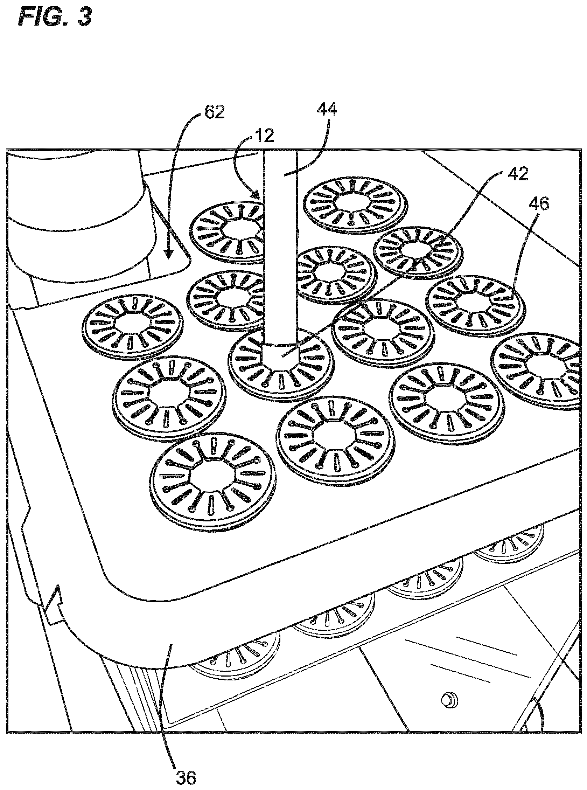

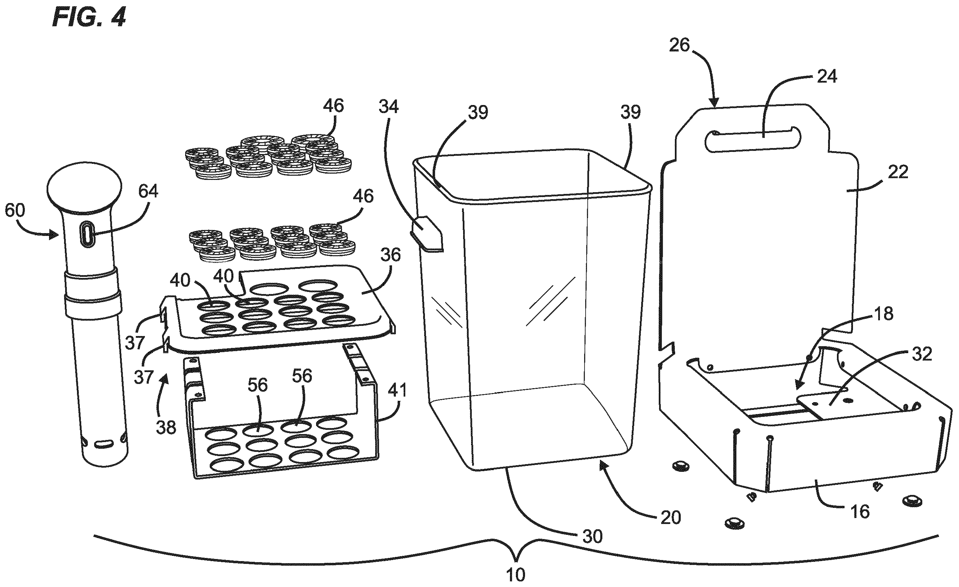

Referring now to FIGS. 1-7, one example of a golf club grip removal tool 10 is illustrated. FIGS. 1A and 1B illustrate the golf club grip removal tool 10 in a fully assembled state. FIG. 2 is a perspective view of the golf club grip removal tool 10, shown with a number of golf clubs 12 placed therein for processing. FIG. 3 is a close-up view illustrating gromets 46 of the tool 10, shown with a golf club 12 inserted therein. And, FIG. 4 shows the golf club grip removal tool 10 in a dis-assembled configuration, illustrating the individual components of the tool 10.

As shown specifically in the disassembled view of FIG. 4, the tool 10 is generally comprised of an outer stand (i.e., base) 16 for providing stability to the tool 10. The stand 16 also provides portability aspects and allows the tool 10 to be transported to different environments or venues (e.g., retail stores, Pro-Shops, Tour vans, etc.) where club grips might be regularly replaced.

The outer stand 16 defines a nest 18 for receiving a water container or tank 20. The outer stand 16 also defines a vertical support wall 22 for providing stability to the stand 16 when the water tank 20 has been placed therein. The vertical support wall 22 defines a handle 24 adjacent a top end 26 thereof for carrying the tool 10 for portability.

The water tank 20 supports heated water 28 during use of the tool 10. The water tank 20 is removably placed on the stand 16, and a bottom/base 30 of the water tank 20 is supported by flanges 32 defined by the stand 16 when the water tank 20 is placed within the nest 18.

The water tank 20 also defines handles 34 for placement and removal thereof during assembly and disassembly of the tool 10.

Still referring to FIG. 4, the water tank 20 is provided with a removable tank lid 36. The tank lid 36 may be formed from a polymeric construction. The tank lid 36 defines flexible latches 37 on opposing sides thereof. The flexible latches 37 are configured to snap over lip portions 39 defined around the opening of the water tank 20 for removably latching the lid 36 to the water tank 20. According to certain inventive aspects, the lid portion 36, even though not fully sealing the water tank 20, still limits evaporation of water from the water tank 20.

As shown in the figures, the tank lid 36 is designed to form part of a two-piece club support structure 38. In the depicted example, the club support 38 is formed by the lid 36 and a generally U-shaped lower support structure 41 (e.g., formed of metal construction according to one example) that is attached to the lid 36. The lower support structure 41 is designed to nest within the water tank 20 during the use of the tool 10. The lower support structure 41 can be removably attached to the lid 36 in a variety of ways. According to certain examples, the lower support structure 41 can include features for snap-fitting to the lid 36. And, according to certain other examples, the lower support structure 41 can be attached to the lid 36 via fasteners such as bolts.

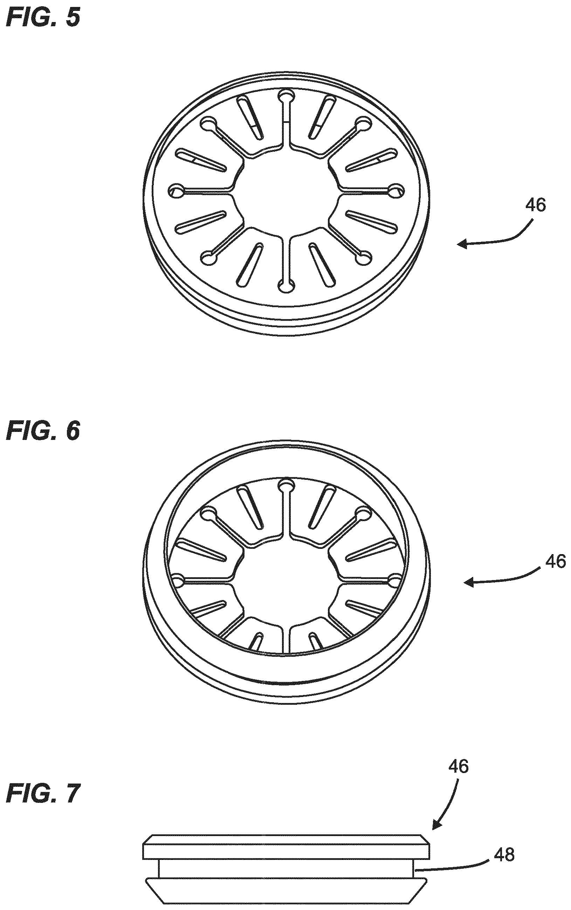

As shown, the lid portion 36 of the club support 38 comprises a plurality of openings 40, each for receiving a worn grip 42 of a club shaft 44. Each of the openings 40 is provided with a shaft gromet 46 that supports and stabilizes the golf clubs 12 during the use of the tool 10. The gromets 46 each define a notch 48 for flexible snap-in placement thereof around apertures defined by the openings 40 of lid portion 36 of the club support 38. Please refer to FIGS. 5-7 for different views of one of the gromets 46.

Still referring to FIG. 4, as shown, the lower support structure 41 also defines openings 56 that are spaced apart from and vertically aligned with corresponding openings 40 of the tank lid portion 36 for allowing the golf club shafts 44 to be inserted through and stabilized during the use of the tool 10. The openings 56 of the lower support structure 41 also receive grommets similar to the grommets 46 that are provided on the tank lid 36. The grommets 46 for the lower club support 41, similar to those for the lid 36, each define a notch 48 for flexible snap-in placement thereof around apertures defined by the openings 56 of the lower club support 41.

In the depicted example, the lower club support 41 defines twelve openings 56 that are aligned with twelve openings 40 provided on the tank lid 36 for supporting twelve clubs 12 at the same time. As also shown, the tank lid 36 includes two additional larger/oversized openings 40 adjacent the back side of the lid 36. These oversized openings 40 may be used for accommodating clubs 12 with larger grips such as putters.

The water tank 20 receives the club support 38, the lower portion 41 of which is submerged within the water 28 during the operation of the tool 10. After the water tank 20 has been filled with water 28, a heat source 60 is used to heat the water 28 and also provide a generally constant water temperature within the tank 20.

According to one example embodiment, a heat source 60 in the form of a sous vide water heater/circulator can be used. A sous vide type heater 60 can provide modularity and portability to the golf club grip removal tool 10 and can facilitate transport.

As shown in FIGS. 1-4, the lid portion 36 of the club support 38 defines a cutout 62 for accommodating the sous vide type heater 60 when the heater 60 is placed within the water tank 20. When the sous vide heater 60 is placed inside the water tank 20, the two-piece club support 38 provides stability to and supports the heater 60, while the heater 60 is operating to heat the water 28 and circulate the water 28 to keep the temperature generally constant.

As shown, the sous vide heater 60 is provided with an operation switch 64 and a handle 66 for handling.

Still referring to FIGS. 1-7 of the application, during use of the tool 10, once the tool 10 has been assembled and the water tank 20 has been filled with water 28, the heat source 60 is used to bring up and maintain the water temperature generally to around 77 degrees Celsius (170 degrees F), preferably by a thermostat. By using a heat source 60 such as a sous vide heater/circulator that is a thermometer probe type heater, the heated water 28 can be in constant circulation around the water tank 20, limiting any significant temperature gradients within the water tank 20 for consistent performance.

Although a temperature of 77 degrees Celsius (170 degrees F) has been specified for the inventive tool 10, in certain embodiments, the water temperature may be between 66 to 88 degrees Celsius (150 to 190 degrees F). In other embodiments, the water temperature may be between 71 to 82 degrees Celsius (160 to 180 degrees F).

Once the water temperature is at the desired level, all of the golf club shafts 44 are placed through the gromets 46 of the spaced apart and aligned openings 40/56 provided by the tank lid 36 and the attached lower support structure 41. An operator can insert each individual club 12 through the associated pair of gromets 46 until a cap of the grip 42 hits the base 30 of the water tank 20, while the grip 42 is being supported by the club support 38.

It should be noted that the grips 42 of the clubs 12 do not have to be fully submerged into the water tank 20 in order for the device 10 to properly function. As long as at least a majority of a grip 42 is submerged under water, the device 10 performs as intended. According to certain examples, if approximately the entire grip except the last inch is submerged, the device 10 can properly function.

The above process can be repeated for all of the clubs 12 to be re-gripped. Once the worn grips 42 have been submerged for a predetermined amount of time (preferably a minimum of 3 minutes), the operator can remove each club 12 and cut the grip 42 in a standard fashion, repeating the process until all of the grips 42 and tape have been removed. Although a minimum of 3 minutes has been specified for keeping the grips 42 submerged, in other embodiments, a period of at least 2 to 2.5 minutes may be sufficient depending upon the water temperature.

Submerging the worn grips 42 within water 28 having a temperature of around 77 degrees Celsius (170 degrees F) for around a minimum of 3 minutes has been found to significantly soften the grips 42 themselves and the tape/adhesive on the shafts 44, reducing the time and effort needed to remove the grips 42 and the tape. And, pre-processing all of the golf clubs 12 at the same time significantly reduces the resources needed as compared to re-gripping clubs 12 one at a time.

Once the tool/device 10 has been used to pre-process the golf shafts 44 for re-gripping, the heat source 60 can be turned-off.

For transportation of the tool 10, the water 28 is normally removed from the tank 20. The sous vide type heater 60 can be placed within the water tank 20 and held in place by the club support 38 during transport. This aids in the safe transit of the tool 10 if used in mobile environments such as a tour van and the like.

The above specification, examples provide a complete description of the manufacture and use of the disclosure.

## Claims

1. A golf club grip removal tool (10) comprising:
a water container (20) including a removable lid portion (36);
a base (16) for removably supporting the water container (20);
a heat source (60) for maintaining water (28) within the water container (20) at a generally constant temperature; and
a golf club support structure (38) defining a plurality of openings (40), each opening (40) for receiving at least a portion of a shaft (44) of a separate golf club (12), the golf club support structure (38) configured to support the golf club shaft (44) of each of the separate golf clubs (12) within the water container (20) in a stable manner, wherein the golf support structure (38) includes a flexible structure (46) placed around an aperture defined by each opening (40) of the plurality of openings (40) such that the flexible structure (46) frictionally holds the shaft (44) of the golf club (12) in a stable manner,
**characterized in that** the removable lid portion (36) defines a part of the golf club support structure (38) such that the lid portion (36) defines the openings (40), each for receiving at least a portion of a shaft (44) of a golf club (12).

2. The golf club grip removal tool (10) of claim 1, wherein the base (16) defines a handle (24) for transportation thereof.

3. The golf club grip removal tool (10) of any preceding claim, wherein the heat source (60) is defined by a removable heater that can be removed from the water container (20).

4. The golf club grip removal tool (10) of claim 3, wherein the removable heater (60) is defined by a thermometer probe type heater.

5. The golf club grip removal tool (10) of claim 4, wherein the probe type heater (60) is defined by a sous vide type heater.

6. The golf club grip removal tool (10) of any preceding claim, wherein the golf club support structure (38) is at least partially positioned within the water container (20).

7. The golf club removal tool (10) of any preceding claim, wherein the golf club support structure (38) is at least partially constructed out of metal.

8. The golf club grip removal tool (10) of any preceding claim, wherein the water container (20) defines a handle (34) for transportation thereof.

## Patentansprüche

1. Werkzeug (10) zum Entfernen eines Golfschlägergriffs, umfassend:
einen Wasserbehälter (20) mit einem abnehmbaren Deckelabschnitt (36);
einen Sockel (16) zum abnehmbaren Stützen des Wasserbehälters (20);
eine Wärmequelle (60) zum Aufrechterhalten des Wassers (28) im Wasserbehälter (20) auf einer im Allgemeinen konstanten Temperatur; und
eine Golfschläger-Stützstruktur (38), die eine Vielzahl von Öffnungen (40) definiert, wobei jede Öffnung (40) dazu dient, mindestens einen Abschnitt eines Schafts (44) eines separaten Golfschlägers (12) aufzunehmen, wobei die Golfschläger-Stützstruktur (38) so konfiguriert ist, dass sie den Golfschlägerschaft (44) jedes der separaten Golfschläger (12) innerhalb des Wasserbehälters (20) auf stabile Weise stützt, wobei die Golfschläger-Stützstruktur (38) eine flexible Struktur (46) einschließt, die um einen von jeder Öffnung (40) der Vielzahl von Öffnungen (40) definierten Durchlass herum derart platziert ist, dass die flexible Struktur (46) den Schaft (44) des Golfschlägers (12) auf stabile Weise durch Reibung hält,
**dadurch gekennzeichnet, dass** der abnehmbare Deckelabschnitt (36) einen Teil der Golfschläger-Stützstruktur (38) definiert, sodass der Deckelabschnitt (36) die Öffnungen (40) definiert, von denen jede dazu dient, mindestens einen Abschnitt eines Schafts (44) eines Golfschlägers (12) aufzunehmen.

2. Werkzeug (10) zum Entfernen eines Golfschlägergriffs nach Anspruch 1, wobei der Sockel (16) einen Griff (24) für dessen Transport definiert.

3. Werkzeug (10) zum Entfernen eines Golfschlägergriffs nach einem der vorstehenden Ansprüche, wobei die Wärmequelle (60) durch eine abnehmbare Heizung definiert ist, die aus dem Wasserbehälter (20) entnommen werden kann.

4. Werkzeug (10) zum Entfernen eines Golfschlägergriffs nach Anspruch 3, wobei die abnehmbare Heizung (60) durch eine Heizung vom Typ einer Thermometersonde definiert ist.

5. Werkzeug (10) zum Entfernen eines Golfschlägergriffs nach Anspruch 4, wobei die Heizung (60) vom Sondentyp durch eine Heizung vom Sous-vide-Typ definiert ist.

6. Werkzeug (10) zum Entfernen eines Golfschlägergriffs nach einem der vorstehenden Ansprüche, wobei die Golfschläger-Stützstruktur (38) mindestens teilweise innerhalb des Wasserbehälters (20) positioniert ist.

7. Werkzeug (10) zum Entfernen eines Golfschlägergriffs nach einem der vorstehenden Ansprüche, wobei die Golfschläger-Stützstruktur (38) mindestens teilweise aus Metall gefertigt ist.

8. Werkzeug (10) zum Entfernen eines Golfschlägergriffs nach einem der vorstehenden Ansprüche, wobei der Wasserbehälter (20) einen Griff (34) für dessen Transport definiert.

## Revendications

1. Outil de retrait de grip de club de golf (10) comprenant :
un récipient d'eau (20) comprenant une partie de couvercle amovible (36) ;
une base (16) pour supporter le récipient d'eau (20) de manière amovible ;
une source de chaleur (60) pour maintenir l'eau (28) contenue dans le récipient d'eau (20) à une température généralement constante ; et
une structure de support de club de golf(38) délimitant une pluralité d'ouvertures (40), chaque ouverture (40) étant destinée à recevoir au moins une partie d'un manche (44) d'un club de golf distinct (12), la structure de support de club de golf (38) étant conçue pour supporter de manière stable le manche de club de golf (44) de chacun des clubs de golf distincts (12) à l'intérieur du récipient d'eau (20), dans lequel la structure de support de club de golf (38) comprend une structure flexible (46) placée autour d'un orifice délimité par chaque ouverture (40) de la pluralité d'ouvertures (40), de sorte que la structure flexible (46) maintienne le manche (44) du club de golf (12) par friction de manière stable,
**caractérisé en ce que** la partie de couvercle amovible (36) délimite une partie de la structure de support de club de golf (38), de telle sorte que la partie de couvercle (36) délimite les ouvertures (40), chacune étant destinée à recevoir au moins une partie d'un manche (44) d'un club de golf (12).

2. Outil de retrait de grip de club de golf (10) selon la revendication 1, dans lequel la base (16) délimite une poignée (24) pour son transport.

3. Outil de retrait de grip de club de golf (10) selon une quelconque revendication précédente, dans lequel la source de chaleur (60) est définie par un élément chauffant amovible qui peut être retiré du récipient d'eau (20).

4. Outil de retrait de grip de club de golf (10) selon la revendication 3, dans lequel l'élément chauffant (60) amovible est défini par un élément chauffant de type sonde de thermomètre.

5. Outil de retrait de grip de club de golf (10) selon la revendication 4, dans lequel l'élément chauffant de type sonde (60) est défini par un élément chauffant de type sous-vide.

6. Outil de retrait de grip de club de golf (10) selon une quelconque revendication précédente, dans lequel la structure de support de club de golf (38) est au moins partiellement positionnée à l'intérieur du récipient d'eau (20).

7. Outil de retrait de grip de club de golf (10) selon une quelconque revendication précédente, dans lequel la structure de support de club de golf (38) est au moins partiellement construite en métal.

8. Outil de retrait de grip de club de golf (10) selon une quelconque revendication précédente, dans lequel le récipient d'eau (20) délimite une poignée (34) pour son transport.
